# NEW EUROPEAN PATENT SPECIFICATION

(11) **EP 0 994 287 B2**
(45) Date of publication and mention of the opposition decision: **26.01.2011**
(45) Mention of the grant of the patent: 10.09.2003
(21) Application number: 99203324.1
(22) Date of filing: 13.10.1999
(51) Int. Cl.: F16L 5/10, F16L 25/00, F16L 17/025

(54) **Composite sleeve-shaped sealing means**
Zusammengesetzte, hülsenförmige Dichtungsvorrichtung
Dispositif d'étanchéité composite en forme de manchon

(30) Priority: 16.10.1998 NL 1010333
(43) Date of publication of application: 19.04.2000
(73) Proprietor: Artech Rubber B.V., 7202 CL Zutphen (NL)
(72) Inventor: Ariese, Hendrikus, 7202 CL Zutphen (NL)
(74) Representative: Ferguson, Alexander

(56) References cited:
- EP-A- 0 139 337
- EP-B- 0 448 924
- CH-A- 247 518
- DE-A- 1 475 807
- DE-A- 2 203 370
- FR-A- 2 169 219
- FR-B- 1 201 761
- FR-B- 1 432 209
- GB-A- 1 059 749
- GB-A- 1 083 451
- GB-A- 2 032 015
- NL-A- 7 500 337
- NL-A- 7 809 260
- US-A- 4 735 440
- US-A- 5 653 542
- US-U- 4 915 422

## Description

The invention relates to a sealing sleeve for sealing annular spaces which are formed at the location of the overlap of two bodies extending into each other and having a different diameter, such as for instance two different pipes. The situation in which a line, such as a pipe or a cable extends through a wider passage in for instance a floor or wall, is also a possibility here.

In case of two different pipes which are in a fluid forwarding connection, these are usually used for transporting water, gas, oils, liquid chemicals etc. One of the pipes can for instance form a house connection and have a smaller diameter than the pipe which forms the main or which is a branch thereof.

Contrary to what is the case in newly built buildings in a previously undeveloped area - where there is all the room for realising a house connection-, there is only very little working space in the ground near the building when making house connections in existing buildings. With such connections it is known to coaxially insert the narrow (house) pipe into the end of the wider main pipe and then to place a sealing plug consisting of two identical halves in the annular space formed. It does not matter here how far the narrow pipe extends into the wide pipe.

A similar situation is present in walls of buildings, in particular foundation walls, floors but also roofs, in which by means of permanent synthetic pipe parts passages are left open in the poured concrete or after pouring wide passages are drilled out, after which the (continuing) lines, such as pipes for water or gas, or cables can be led through. The annular spaces between the line and the permanent pipe part or bore hole wall can later be closed off with the sealing plug consisting of two members.

A sealing consisting of two halves or either a plug is easy to replace as well, when such should be necessary.

From GB-A-2.032.015 or NL-A-79.09260 a composite sealing plug according to the preamble of claim 1 is known. Said plug, which is also commercially available, has a casing which on its outer surface has a series of integrally formed sharp, fin or saw tooth-shaped flexible circumferential profiles, and on the inner surface a series of integrally formed flat, low circumferential steps.

The known sealing plug proved to function reasonably well in general. It appeared, however, that the pressures the plug is able to resist can be lower than desirable in certain uses. It may occur that because of the pressure of the ground material the plug is inserted too far into the annular space, after which the sealing is faulty. Also the sealing against the passage of water from outside the pipes to the inside may be insufficient.

An object of the invention is to improve on at least some of these points.

The invention provides an assembled sleeve-shaped sealing means as described in claim 1.

With the abutment plane the final second circumferential rib forms a stable additional sealing of some length for a fluid leak along the narrow line to the outside of the flange and furthermore ensures early barrier of the (ground) moisture which may be in front of the end flange. Furthermore said second circumferential rib ensures stabilisation of the end flange as seen in a radial plane.

According to the invention as defined in claim 1, said final second circumferential rib is substantially shape-retaining.

According to the invention as defined in claim 1, the end plane of the end flange is formed a little conically sloping toward the outer edge, so that in case of a vertical arrangement no moisture accumulation can take place near the transition between the end flange and the line extending through it.

Preferably the final second circumferential rib has an inclined plane facing the other end.

Stability is further improved when the casing between the flange and the first circumferential rib situated in front of it has a larger thickness than in between the other first circumferential ribs.

From another aspect the invention provides a sealing means of the kind mentioned in the preamble, which can be inserted more easily in the annular space. To that end it is provided that the other end of the casing is narrowed in relation to the rest of the casing and is substantially cylindrical. As a result of the narrowing the so-called other end is more complying than the rest of the casing. Moreover no material is used where it is not necessary.

Preferably the narrowed portion extends from the other end to the next first circumferential rib.

Insertion of the sealing means is improved when the primary first circumferential rib situated closest to the other end of the casing extends to a lower radial level in relation to the centre line of the cylindrical casing than the subsequent secondary first circumferential ribs.

The insertion of the sealing means is further improved when the second circumferential rib situated closest to the other end of the casing is situated at a distance from said other end which is larger than the first circumferential rib situated closest to the other end. As a result the relatively flexible end part can by some tilting in the axial plane be urged against the inner pipe, which makes an inclined insertion possible.

Preferably said second circumferential rib is at least almost radially aligned with the opposite secondary first circumferential rib.

From a further aspect the invention provides a sealing means of the kind mentioned in the preamble, which at the location of the circumferential ribs realises an improved sealing. To that end it is provided that the first circumferential ribs are formed with a first axially oriented annular plane facing the other casing end, a second axially oriented annular plane facing the one end and a radially oriented outer surface connecting these planes to each other, in which the second annular surface extends radially beyond the first annular plane. Thus each first circumferential rib forms a kind of flexible radial flange, which after bending counter to the direction of insertion is sealingly clamped with the radial outer surface against the inner surface of the widest pipe.

Preferably the radially oriented outer surface comprises an inclined portion facing the other end, which after said bending abuts the inner surface of the widest pipe. The seating is improved here when the radial outer surface has a substantially convex shape in axial cross-section.

Sealing against the outer surface of the narrowest pipe is improved when at least some of the second circumferential ribs form a convex radially oriented inner surface.

Preferably the sealing means according to the invention is made from a synthetic rubber, including gas and water sealing rubbers, such as EPDM, oil resistant rubbers, fire retardant rubbers, cold or warm temperature resistant rubbers and/or chemical resistant rubbers, with a Shore-A hardness of approximately 70 degrees or more in order to have good firmness and durability.

From another aspect the invention provides an assembled sleeve-shaped sealing means for the sealing of the annular space between two partly overlapping bodies having walls of a different diameter, such as two pipes or a line and a wall passage for it, in which the sealing means comprises a cylindrical casing assembled from two or more similar longitudinal members and an end flange formed at the end of the casing, which are destined respectively, to be accommodated in the annular space and to be placed against the end edge of the widest pipe, in which at its outer surface the casing is provided with a number of first circumferential ribs spaced apart in axial direction, and at its inner surface is provided with a number of second circumferential ribs spaced apart in axial direction, in which at the one end of the casing, at the inner circumference of the end flange, a final second circumferential rib has been formed, which is substantially shape-retaining. Preferably the final second circumferential rib constitutes an axial abutment plane against the narrow pipe or line, as a result of which the length of the leakage path as well as the stability becomes optimal.

From another aspect the invention provides an assembly of two bodies having walls of a different diameter which reach into each other in a coaxial manner to define an annular space to be sealed, such as two pipes of a different diameter or a line and a wall passage for it, in which the annular space is sealed by means of a sealing means according to the invention, in which the outer diameter of the first circumferential ribs and the inner diameter of the second circumferential ribs are adjusted such to the outer diameter of the smallest pipe or line and the inner diameter of the largest pipe or wall passage, that by means of pressing-in against the wall concerned of the largest pipe or passage, the circumferential ribs are sealingly clamped.

The invention will now be elucidated on the basis of the exemplary embodiment of a sealing according to the invention, shown in the attached figures, in which:
Figure 1 is a side view on a composite half of a sealing according to the invention consisting of two identical longitudinal members; and
Figure 2 is a longitudinal cross-section of an assembly of two overlapping pipes with a sealing formed by two longitudinal members according to figure 1.

The half 4 of the cylindrical sealing or sealing body 44 is made of EPDM with a Shore-A hardness of 75 degrees. The sealing half 4 comprises a casing (half) 5 with an internal external main diameter of D1 (in this example 34 mm) and with at the one end an end flange 6 extending radially outwards with an outer diameter of D2 (in this example 61 mm) and with at the other end a narrowed end portion 15, which has a diameter of D3 (in this example 45 mm), which is a little smaller than diameter D4 (in this example 48 mm) of the rest of the casing 5.

At the outside, the end portion 15 changes into a primary first circumferential rib 7a, which -as seen in the drawing- has a radial annular plane 9a oriented to the left, as well as a radial annular plane 10 oriented to the right, in which the annular plane 9a changes into radial annular plane 10 via inclined ascending annular plane 11 and convex annular plane 12. The circumferential rib 7a has a diameter D5 (in this example 55 mm). Behind the circumferential rib 7a a series of substantially identical circumferential ribs 7 are integrally formed on the casing 5, which circumferential ribs are situated at equal distances from each other and have a diameter D6 (in this example 57 mm) which is a little larger than D5.

The far right circumferential rib 7b has a relatively narrow radial annular plane 10b, which ends in thickened casing portion 13 with diameter D7 (a little larger than D4, in this example 51 mm), which connects the circumferential rib 7b to the end flange 6.

The circumferential ribs 7a, 7, 7b have a thickness of approximately 4 mm and extend 4 and 5 mm, respectively, from the casing 5 to the outside. They are flexible to such an extent, that some bending in the direction T is possible.

At the inner circumference of the casing convex circumferential ribs 8 are integrally formed, which have an inner diameter of D8. The far left circumferential rib 8 is situated at a distance of S2 (in this example 10 mm) from the left end of the casing 5 and in the same radial area as the far left circumferential rib 7 but one. The far left circumferential rib 7a is situated at a distance of S1 from the left end of the casing 5, which amounts to approximately half S2 (in this example 5 mm).

Finally at the location of the right end a special circumferential rib 8a is integrally formed on the inner plane of the casing 5, which rib has an inclined ascending annular plane 14 and a circumferential axial (namely extending in axial direction, as shown) annular abutment plane 16, which ends in the radial end plane 17 of the end flange 6. The circumferential rib 8a is substantially shape-retaining because of the material and in its width or either its low height, namely rigidly against bending in axial direction of the line which the rib 8a will abut, so that the abutment plane 16 will abut the outer surface of the pipe 3 tightly and level.

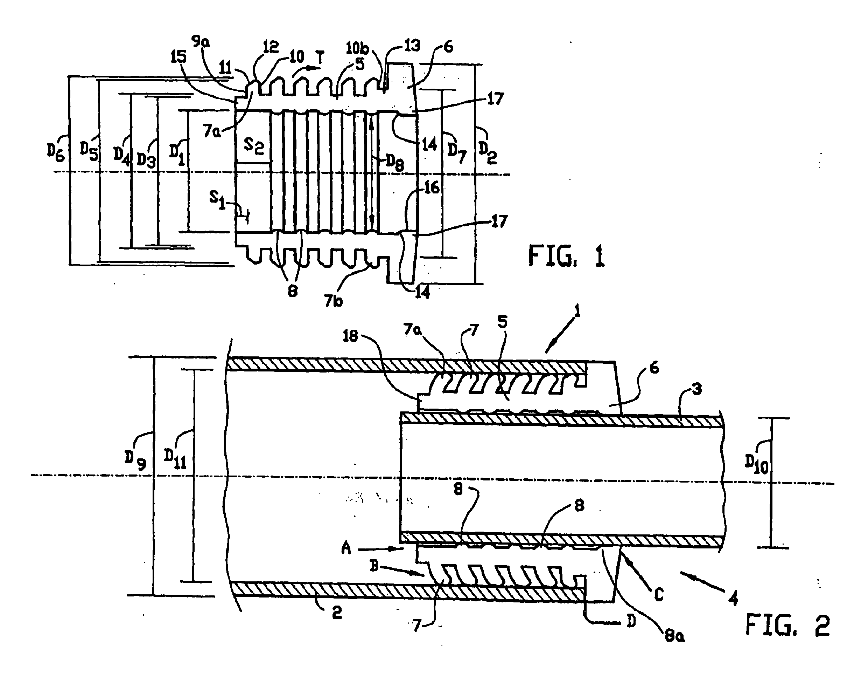

In figure 2 two sealing halves 4 are arranged in the annular space 18 formed between coaxially inter-engaging pipe ends 2 and 3 in order to form sealing assembly 1. The inner diameter D11 of pipe 2 and the outer diameter D10 of pipe 3 are smaller than D5 and larger than D8, respectively. Furthermore D2 is almost the same as the outer diameter D9 of the pipe 2. When placing, the pipes 2 and 3 are already on the location indicated in figure 2. The sealing halves 4 can easily be inserted from the right to the left in the annular space 18, which action is facilitated by the narrowed end portion 15 and lowered circumferential rib 7a.

During insertion of the sealing halves 4, the circumferential ribs 7a, 7, 7b will be bent backwards as a result of contact with the inner surface of the widest pipe 2, and be pressed against it with their surfaces 11. This is promoted by the presence of the circumferential ribs 8. When the sealing halves 4 are inserted so far that the end flange 6 abuts the end edge of the pipe 2, the sealing 4 will not only have sealed the leakage paths A and B, but as a result of circumferential rib 8a with the abutment plane 16 pressed against the pipe 3 and because of the thickened portion 13 which keeps the end flange 6 against the pipe end edge, also a leakage path along C and D will be prevented to a large extent.

Because the end plane 17 of the end flange 6 slopes conically to the outside, in case the pipes 2 and 3 are arranged vertically no moisture will be left on the end plane and penetrate downwards via path C along the outer surface of the pipe 3.

It will be understood that the pipe 3 can also be a (thicker) cable, and instead of pipe 2 a passage in a wall (wall, floor, roof) can be formed, through which the (then continuing) line 3 extends.

It appeared that with the sealing according to the invention under circumstances similar to the ones with the known plug much higher pressures can be resisted.

## Claims

1. Assernbled sleeve-shaped sealing means (1,4) for the sealing of the annular space (18) between two partly overlapping bodies (2,3) having walls of a different diameter, such as two pipes or a line and a wail passage for it, in which the sealing means comprises a cylindrical casing (5) having an axis and being composed of two or more similar longitudinal members and an end flange (6) formed at one end of the casing, which are intended to be accommodated in the annular space and to be placed against the end edge of the widest pipe or line (2), respectively, the casing at its outer surface being provided with a number of first circumferential ribs (7) spaced apart in axial direction, and at its inner surface being provided with a number of second circumferential ribs (8) spaced apart in axial direction, **characterized in that** a final second circumferential rib (8a) is substantially shape-retaining and is formed at said one end of the casing at the inner circumference of the end flange (6), which rib is provided with a circumferential, axially extending annular abutment plane (16) for abutment against the narrow line or pipe, in which before use the final second circumferential rib (8a) has a largest radial height in the end plane (17) of the flange (6), thereby forming a barrier in the end plane of the flange during use, in which the end plane (17) of the end flange is formed a little conically sloping toward the outer edge.

2. Assembled sleeve-shaped Sealing means according to claim 1, in which the final second circumferential rib (8a) has an inclined pilot plane (14) facing the other end.

3. Assembled sleeve-shaped Sealing means according to any one of the preceding claims, in which the casing (5) between the end flange (6) and the first circumferential rib (7b) situated in front of it has a larger radial thickness than in between the other first circumferential ribs (7).

4. Assembled sleeve-shaped Sealing means according to any one of the preceding claims, in which the other end (15) of the casing is narrowed in relation to the rest of the casing and is substantially cylindrical.

5. Assembled sleeve-shaped Sealing means according to claim 4, in which the narrowed portion (15) extends from the other end to the next first circumferential rib (7a).

6. Assembled sleeve-shaped Sealing means according to claim 4 or 5, in which the primary first circumferential rib (7a) situated closest to the other end (15) of the casing extends to a lower radial level in relation to the centre line of the cylindrical casing than the subsequent secondary first circumferential ribs (7).

7. Assembled sleeve-shaped Sealing means according to any one of the preceding claims, in which the second circumferential rib (8) situated closest to the other end of the casing is situated at a distance from said other end (15) which is larger than the distance between said other end and the first circumferential rib (7a) situated closest to said other end.

8. Assembled sleeve-shaped Sealing means according to claim 7, in which said second circumferential rib (8) is at least almost radially aligned with the opposite secondary first circumferential rib (7a).

9. Assembled sleeve-shaped Sealing means according to any one of the preceding claims, in which the first circumferential ribs (7) are formed with a first axially oriented annular plane (9a) facing the other casing end (15), a second axially oriented annular plane (10) facing the one end and a radially oriented outer surface (11,12) connecting these planes to each other, in which the second annular plane extends radially beyond the first annular plane.

10. Assembled sleeve-shaped Sealing means according to claim 9, in which the radially oriented outer surface comprises an inclined portion (11) facing the other end (15).

11. Assembled sleeve-shaped Sealing means according to claim 9 and 10, in which the radially oriented outer surface (12) has a substantially convex shape in axial cross-section.

12. Assembled sleeve-shaped Sealing means according to any one of the preceding claims, in which at least some of the second circumferential ribs (8) form a convex radially oriented inner surface.

13. Assembled sleeve-shaped Sealing means according to any one of the preceding claims, made from a synthetic rubber with a Shore-A hardness of approximately 70 degrees or more.

14. Assembly of two bodies (2,3) having walls of a different diameter which reach into each other in a coaxial manner to define an annular space to be sealed, such as two pipes of a different diameter or a line and a wall passage for it, **characterized in that** the annular space is sealed by means of an assembled sleeve-shaped sealing means (1,4) according to any one of the preceding claims, in which the outer diameter of the first circumferential ribs (7) and the inner diameter of the second circumferential ribs (8) are adjusted such to the outer diameter of the smallest pipe or line (3) and the inner diameter of the largest pipe or wall passage (2), that by means of pressing-in against the wall concerned of the largest pipe or passage, the circumferential ribs are sealingly clamped.

## Patentansprüche

1. Zusammengesetztes hülsenförmiges Dichtungsmittel (1,4) zum Dichten des Ringraums (18) zwischen zwei sich teilweise überlappenden Körpern (2, 3) mit Wänden eines unterschiedlichen Diameters, wie zwei Röhre oder eine Leitung und ein Wändedurchgang dazu, wobei das Dichtungsmittel einen zylindrischen Mantel (5), mit einer Achse und aus zwei oder mehr ähnlichen Längselementen zusammengestellt, und einen an einem Ende des Mantels gebildeten Endflansch (6), umfaßt, die bestimmt sind in dem Ringraum aufgenommen zu werden und gegen den Endrand des weitesten Rohrs oder beziehungsweise der weitesten Leitung (2) aufgestellt zu werden, wobei der Mantel an seiner Außenfläche mit einer Anzahl in Axialrichtung auf Abstand voneinander gelegener erster Umfangsrippen (7) versehen ist, und an seiner Innenfläche mit einer Anzahl in Axialrichtung auf Abstand voneinander gelegener zweiter Umfangsrippen (8) versehen ist, **dadurch gekennzeichnet, daß** eine letzte zweite Umfangsrippe (8a) hauptsächlich formbeständig ist und an dem einen Ende des Mantels an dem Innenumfang des Endflansches (6) gebildet ist, welche Rippe mit einer umgehenden, sich axial erstreckenden ringförmigen Anschlagfläche (16) versehen ist, zum Anschlagen an die schmale Leitung oder das schmale Rohr, wobei vor Gebrauch die letzte zweite Umfangsrippe (8a) die größte radiale Höhe in der Endfläche (17) des Flansches (6) hat, um auf diese Weise eine Sperrschicht in der Endfläche des Flansches während Gebrauch zu bilden, wobei die Endfläche (17) des Endflansches ein wenig konisch abläufend zu dem Außenrand gebildet ist.

2. Zusammengesetztes hülsenförmiges Dichtungsmittel nach Anspruch 1, wobei die letzte zweite Umfangsrippe (8a) eine dem anderen Ende zugekehrte schräge Suchfläche (14) hat.

3. Zusammengesetztes hülsenförmiges Dichtungsmittel nach einem der vorhergehenden Ansprüche, wobei der Mantel (5) zwischen dem Endflansch (6) und der davor gelegenen ersten Umfangsrippe (7b) eine größere radiale Dicke als zwischen den anderen ersten Umfangsrippen (7) hat.

4. Zusammengesetztes hülsenförmiges Dichtungsmittel nach einem der vorhergehenden Ansprüche, wobei das andere Ende (15) des Mantels bezüglich des Restes des Mantels verjüngt und hauptsächlich zylindrisch ist.

5. Zusammengesetztes hülsenförmiges Dichtungsmittel nach Anspruch 4, wobei der verengte Abschnitt (15) sich von dem anderen Ende zu der folgenden ersten Umfangsrippe (7a) erstreckt.

6. Zusammengesetztes hülsenförmiges Dichtungsmittel nach Anspruch 4 oder 5, wobei die am nächsten beim anderen Ende (15) des Mantels gelegene primäre erste Umfangsrippe (7a), zu einem niedrigen radialen Niveau bezüglich der Herzlinie des zylindrischen Mantels reicht als die darauffolgenden sekundären ersten Umfangsrippen (7).

7. Zusammengesetztes hülsenförmiges Dichtungsmittel nach einem der vorhergehenden Ansprüche, wobei die am nächsten beim anderen Ende des Mantels gelegene zweite Umfangsrippe (8) auf einem Abstand von dem anderen Ende (15), der größer ist als der Abstand zwischen dem anderen Ende und der am nächsten beim anderen Ende gelegenen ersten Umfangsrippe (7a), gelegen ist.

8. Zusammengesetztes hülsenförmiges Dichtungsmittel nach Anspruch 7, wobei die zweite Umfangsrippe (8) radial zumindest nahezu in einer Linie mit der gegenüberliegenden sekundären ersten Umfangsrippe (7a) gelegen ist.

9. Zusammengesetztes hülsenförmiges Dichtungsmittel nach einem der vorhergehenden Ansprüche, wobei die ersten Umfangsrippen (7) mit einer ersten, dem anderen Mantelende zugekehrten, axialen Ringfläche (9a), mit einer zweiten, dem einen Ende zugekehrten axialen Ringfläche (10) und mit einer diese Flächen miteinander verbindenden radial orientierten Außenfläche (11, 12), wobei die zweite Ringfläche sich radial außer der ersten Ringfläche erstreckt, gebildet sind.

10. Zusammengesetztes hülsenförmiges Dichtungsmittel nach Anspruch 9, wobei die radial orientierte Außenfläche einen schrägen dem anderen Ende (15) zugekehrten Abschnitt (11) umfaßt.

11. Zusammengesetztes hülsenförmiges Dichtungsmittel nach Anspruch 9 und 10, wobei die radial orientierte Außenoberfläche in axialem Durchschnitt eine hauptsächlich konvexe Form hat.

12. Zusammengesetztes hülsenförmiges Dichtungsmittel nach einem der vorhergehenden Ansprüche, wobei zumindest einige der zweiten Umfangsrippen (8) eine konvexe radial orientierte Innenfläche bilden.

13. Zusammengesetztes hülsenförmiges Dichtungsmittel nach einem der vorhergehenden Ansprüche, aus einem synthetischen Gummi mit einer Shore-A Härte von ungefähr 70 Grad oder mehr hergestellt.

14. System von zwei Körpern (2, 3) mit Wänden eines unterschiedlichen Diameters, die auf eine koaxiale Weise ineinander schieben um einen abzudichtenden Ringraum zu bestimmen, wie zwei Röhre eines unterschiedlichen Diameters, oder eine Leitung und einen Wändedurchgang dazu, **dadurch gekennzeichnet, daß** der Ringraum durch zusammengesetzte hülsengeformte Dichtungsmittel (1, 4) nach einem der vorhergehenden Ansprüche gedichtet wird, wobei der Außendiameter der ersten Umfangsrippen (7) und der Innendiameter der zweiten Umfangsrippen (8) derartig an den Außendiameter des schmalsten Rohrs oder Leitung (3) und den Innendiameter des weitesten Rohrs oder Wändedurchgangs (2) angepasst sind, daß die Umfangsrippen durch Eindruck abdichtend gegen die betreffende Wand des weitesten Rohrs oder Durchgangs geklemmt sind.

## Revendications

1. Dispositif d'étanchéité assemblé en forme de manchon (1, 4) pour rendre étanche l'espace annulaire (18) entre deux corps (2, 3) se chevauchant partiellement et comprenant des parois de diamètre différent, comme deux tuyaux ou une conduite et un passage dans une paroi pour la conduite, dans lequel le dispositif d'étanchéité comprend un boîtier cylindrique (5) ayant un axe et composé de deux éléments longitudinaux similaires ou plus et une aile d'extrémité (6) formé à une première extrémité du boîtier, qui sont destinés à être logés dans l'espace annulaire et placés contre le rebord d'extrémité du tuyau ou de la conduite (2) le plus large, respectivement le boîtier étant muni sur sa surface extérieure d'un certain nombre de premières nervures périphériques (7) espacées les unes des autres dans la direction axiale, et étant muni sur sa surface intérieure d'un certain nombre de deuxièmes nervures périphériques (8) espacées les unes des autres dans la direction axiale, **caractérisé en ce qu'**une deuxième nervure périphérique finale (8a) est sensiblement indéformable et est formée sur ladite première extrémité du boîtier sur la circonférence intérieure de l'aile d'extrémité (6), ladite nervure étant munie d'un plan de butée annulaire périphérique (16) s'étendant dans le sens axial destiné à buter contre la conduite ou le tuyau étroit, dans lequel, avant l'utilisation, la deuxième nervure périphérique finale (8a) a une hauteur radiale plus grande dans le plan d'extrémité (17) de l'aile (6), formant ainsi une barrière dans le plan d'extrémité de l'aile durant l'utilisation, dans lequel le plan d'extrémité (17) de l'aile d'extrémité a une forme légèrement conique en pente vers le bord extérieur.

2. Dispositif d'étanchéité assemblé en forme de manchon selon la revendication 1, dans lequel la deuxième nervure périphérique finale (8a) a un plan pilote incliné (14) faisant face à l'autre extrémité.

3. Dispositif d'étanchéité assemblé en forme de manchon selon l'une quelconque des revendications précédentes, dans lequel le boîtier (5) entre l'aile d'extrémité (6) et la première nervure périphérique (7b) située devant lui a une épaisseur radiale plus grande qu'entre les autres premières nervures périphériques (7).

4. Dispositif d'étanchéité assemblé en forme de manchon selon l'une quelconque des revendications précédentes, dans lequel l'autre extrémité (15) du boîtier est rétrécie par rapport au reste du boîtier et est sensiblement cylindrique.

5. Dispositif d'étanchéité assemblé en forme de manchon selon la revendication 4, dans lequel la portion rétrécie (15) s'étend depuis l'autre extrémité vers la première nervure périphérique suivante (7a).

6. Dispositif d'étanchéité assemblé en forme de manchon selon la revendication 4 ou 5, dans lequel la première nervure périphérique primaire (7a) située le plus près de l'autre extrémité (15) du boîtier s'étend vers un niveau radial plus bas par rapport à la ligne centrale du boîtier cylindrique que les premières nervures périphériques (7) secondaires suivantes.

7. Dispositif d'étanchéité assemblé en forme de manchon selon l'une quelconque des revendications précédentes, dans lequel la deuxième nervure périphérique (8) située le plus près de l'autre extrémité du boîtier se trouve à une certaine distance de ladite autre extrémité (15) qui est plus grande que la distance entre ladite autre extrémité et la première nervure périphérique (7a) située le plus près de ladite autre extrémité.

8. Dispositif d'étanchéité assemblé en forme de manchon selon la revendication 7, dans lequel ladite deuxième nervure périphérique (8) est au moins presque alignée dans le sens radial avec la première nervure périphérique (7a) secondaire opposée.

9. Dispositif d'étanchéité assemblé en forme de manchon selon l'une quelconque des revendications précédentes, dans lequel les premières nervures périphériques (7) sont formées d'un premier plan annulaire (9a) orienté dans le sens axial faisant face à l'autre extrémité (15) du boîtier, d'un deuxième plan annulaire (10) orienté dans le sens axial faisant face à la première extrémité et d'une surface extérieure (11, 12) orientée dans le sens radial reliant ces plans l'un à l'autre, dans lequel le deuxième plan annulaire s'étend dans le sens radial au-delà du premier plan annulaire.

10. Dispositif d'étanchéité assemblé en forme de manchon selon la revendication 9, dans lequel la surface extérieure orientée dans le sens radial comprend une portion inclinée (11) faisant face à l'autre extrémité (15).

11. Dispositif d'étanchéité assemblé en forme de manchon selon les revendications 9 et 10, dans lequel la surface extérieure orientée dans le sens radial (12) a une forme sensiblement convexe en section transversale axiale.

12. Dispositif d'étanchéité assemblé en forme de manchon selon l'une quelconque des revendications précédentes, dans lequel au moins certaines des deuxièmes nervures périphériques (8) forment une surface intérieure convexe orientée dans le sens radial.

13. Dispositif d'étanchéité assemblé en forme de manchon selon l'une quelconque des revendications précédentes, constitué d'un caoutchouc synthétique ayant une dureté Shore A de 70 degrés ou plus environ.

14. Ensemble de deux corps (2, 3) ayant des parois de diamètre différent qui se rencontrent de manière coaxiale pour définir un espace annulaire devant être rendu étanche, comme deux tuyaux de diamètre différent ou une conduite et un passage dans une paroi pour la conduite, **caractérisé en ce que** l'espace annulaire est rendu étanche au moyen d'un dispositif d'étanchéité assemblé en forme de manchon (1, 4) selon l'une quelconque des revendications précédentes, dans lequel le diamètre extérieur des premières nervures périphériques (7) et le diamètre intérieur des deuxièmes nervures périphériques (8) sont ajustés sur le diamètre extérieur du tuyau ou de la conduite (3) le plus petit et le diamètre intérieur du tuyau ou du passage dans la paroi (2) le plus grand, de sorte que en pressant contre la paroi concernée du tuyau ou passage le plus grand, les nervures périphériques sont serrées de manière étanche.
